# FASCICULE DE BREVET EUROPEEN

(11) **EP 0 932 587 B1**
(45) Date de publication et mention de la délivrance du brevet: **19.10.2005**
(21) Numéro de dépôt: 98941563.3
(22) Date de dépôt: 07.08.1998
(51) Int. Cl.: C03C 25/02, D06B 1/14, C03C 25/20

(54) **PROCEDE DE FABRICATION D'UN FIL ET PRODUITS COMPRENANT CE FIL**
VERFAHREN ZUR HERSTELLUNG EINER FASER UND DIESE FASER ENTHALTENDE PRODUKTE
METHOD FOR MAKING A YARN AND PRODUCTS COMPRISING SAME

(30) Priorité: 21.08.1997 FR 9710529
(43) Date de publication de la demande: 04.08.1999
(73) Titulaire: Saint-Gobain Vetrotex France S.A., 73000 Chambéry (FR)
(72) Inventeur: MOIREAU, Patrick, F-73190 Curienne (FR); GIBELLO, Bruno, F-73000 Chambéry (FR)
(74) Mandataire: Muller, René
(86) Numéro de dépôt international: PCT/FR1998/001764
(87) Numéro de publication internationale: WO 1999/010291

(56) Documents cités:
- EP-A- 0 570 283
- FR-A- 1 161 659
- GB-A- 668 319
- GB-A- 1 273 377

## Description

La présente invention est relative au domaine des fibres de renforcement et des composites et, en particulier, au dépôt de compositions d'ensimages sur des filaments (ou des fils) de verre.

La fabrication de fils de verre de renforcement se fait de façon connue à partir de filets de verre fondu s'écoulant des orifices de filières. Ces filets sont étirés sous forme de filaments continus, puis ces filaments sont rassemblés en fils de base, lesquels sont ensuite collectés.

Avant leur rassemblement sous forme de fils, les filaments sont revêtus d'un ensimage par passage sur un organe ensimeur. Ce dépôt est nécessaire à l'obtention des fils et permet leur association avec d'autres matières organiques et/ou inorganiques pour réaliser des composites.

L'ensimage sert en premier lieu de lubrifiant et protège les fils de l'abrasion résultant du frottement à grande vitesse des fils sur divers organes lors du procédé précédemment cité.

L'ensimage peut également assurer, notamment après polymérisation, l'intégrité des fils susmentionnés, c'est-à-dire la liaison des filaments entre eux au sein des fils. Cette intégrité est notamment recherchée dans les applications textiles où les fils sont soumis à de fortes contraintes mécaniques. En effet, si les filaments sont peu solidaires les uns des autres, ils se rompent plus facilement et viennent perturber le fonctionnement des machine textiles. Les fils non intègres sont, de plus, considérés comme difficiles à manipuler.

Cependant, l'ensimage est également employé dans des cas où cette intégrité n'est pas recherchée, comme pour les fibres de renforcement, lorsqu'une vitesse élevée d'imprégnation par la matière à renforcer est recherchée. Ainsi, dans la fabrication par exemple de tuyaux par des techniques d'imprégnation directe et d'enroulement filamentaire, on met en oeuvre des fils ouverts dans lesquels les filaments sont dissociés les uns des autres. Des quantités d'ensimage faibles, notamment inférieures à 0,5% en poids, sont alors utilisées.

L'ensimage facilite également le mouillage et/ou l'imprégnation des fils par les matières à renforcer et aide à la création de liaisons entre lesdits fils et lesdites matières. De la qualité de l'adhésion de la matière aux fils et de l'aptitude au mouillage et/ou à l'imprégnation des fils par la matière dépendent notamment les propriétés mécaniques des composites obtenus à partir de ladite matière et desdits fils.

La plupart des ensimages actuellement utilisés sont des ensimages aqueux simples à manipuler, mais devant être déposés en grandes quantités sur les filaments pour être efficaces. L'eau représente généralement plus de 90 % en poids de ces ensimages (pour des raisons de viscosité notamment), ce qui oblige à sécher les fils avant leur utilisation, l'eau pouvant nuire à la bonne adhésion entre les fils et les matières à renforcer. Ces séchages sont longs et coûteux et leur efficacité n'est pas toujours optimale ; ils nécessitent la mise en oeuvre d'étuves de grande capacité. De plus, lorsqu'ils sont faits pendant l'opération de fibrage (c'est-à-dire avant collecte des fils obtenus par rassemblement des filaments), au niveau des filaments (WO 92/05122) ou au niveau des fils (US-A-3 853 605), ils nécessitent l'implantation de dispositifs de séchage sous chaque filière et lorsqu'ils sont faits sur des enroulements de fils, ils entraînent des risques de migration irrégulière et/ou sélective des composants de l'ensimage au sein des enroulements (les ensimages aqueux ayant déjà tendance à se répartir sur les fils de façon irrégulière du fait de leur nature), et éventuellement des phénomènes de coloration des fils ou de déformation des enroulements. D'autre part, la déformation des enroulements s'observe fréquemment, en l'absence de séchage, sur les enroulements à bords droits (stratifils) de fils fins (c'est-à-dire présentant un « titre » ou « masse linéique » de 300-600 tex (g/km) ou moins) revêtus d'ensimages aqueux.

C'est pour remédier à ces inconvénients qu'a été développé un nouveau type d'ensimages pratiquement dénués de solvants, dits anhydres. Les ensimages anhydres sont des solutions polymérisables et/ou réticulables qui contiennent éventuellement des solvants organiques et/ou de l'eau en faibles proportions, en général inférieures à 5 % en poids. Ils se distinguent avantageusement des ensimages aqueux par leur aptitude à se répartir de manière homogène et uniforme à la surface des filaments, c'est-à-dire en formant des films d'épaisseurs constantes et en ce qu'ils rendent inutile tout traitement ultérieur de séchage ou d'élimination du solvant, car les faibles quantités de celui-ci s'évaporent lors du dépôt de l'ensimage sur les filaments et de la polymérisation de l'ensimage.

D'autre part, les quantités d'ensimage anhydre déposées sur les filaments sont bien moindres que celles d'ensimage aqueux ; ainsi, dans un dépôt au moyen d'un rouleau ensimeur, il se forme à la surface de celui-ci une pellicule d'épaisseur n'atteignant pas 15 µm dans le cas d'un ensimage anhydre, au lieu d'une pellicule de 90 µm d'épaisseur approximative pour un ensimage aqueux. Ces moindres quantités d'ensimage anhydre sont du reste déposées sur les filaments avec un rendement bien supérieur pouvant atteindre 100 % pour un choix judicieux des conditions opératoires, tandis que ce rendement est généralement de l'ordre de 40 à 75 % avec les ensimages aqueux.

Les ensimages anhydres se répartissent principalement en trois catégories.

La première regroupe les ensimages polymérisables au rayonnement ultraviolet, tels que décrits dans le brevet EP 0 570 283 et comprenant par exemple :
◆ au moins un monomère et/ou oligomère mono- ou polyinsaturé du type polyester acrylate, époxy acrylate, composé siliconé, uréthane acrylate ;
◆ au moins un photoamorceur tel que la benzoine, l'acétophénone, la benzophénone, la sulfonylacétophénone et leurs dérivés, ainsi que les thioxanthones ;
◆ le cas échéant au moins un solvant organique ; et éventuellement
◆ des additifs tels qu'au moins un agent mouillant, un promoteur d'adhésion, un agent anti-retrait, un agent de pontage consistant notamment en un silane ;

La deuxième famille d'ensimages anhydres est celle des ensimages polymérisables et/ou réticulables thermiquement, tels que décrits dans les demandes de brevets FR 93/14792 et 96/00067.

A titre d'exemple, le système de base de ces compositions comprend:
◆ un constituant acrylique et un peroxyde amorceur radicalaire thermique.
◆ ou un constituant époxy et un constituant anhydride qui polymérisent en réagissant l'un avec l'autre ;

La troisième catégorie d'ensimages anhydres fait partie de l'enseignement de la demande FR 97/05926 : il s'agit des ensimages polymérisables à température ambiante, dont les systèmes de base peuvent contenir un ou plusieurs monomères homopolymérisables et/ou au moins deux monomères copolymérisables sans apport extérieur d'énergie. Dans l'hypothèse d'une copolymérisation de deux monomères, ceux-ci peuvent être déposés sur les filaments sous forme de leur mélange en solution, immédiatement après que ce mélange a été formé, ou sous forme d'une première solution stable contenant un premier mélange de monomères et d'une seconde solution stable contenant un second mélange de monomères. Dans cette dernière variante, la première solution est appliquée sur les filaments, la seconde l'est ultérieurement, au plus tard lors du rassemblement des filaments en fils. Quoi qu'il en soit, la copolymérisation démarre en général dès la mise en présence du premier et du second monomère l'un avec l'autre sur les filaments et, le cas échéant, du ou des catalyseurs requis.

Les traitements d'exposition au rayonnement ultraviolet et les traitements thermiques requis pour polymériser les ensimages des deux premiers types précédemment cités sont effectués en une ou en plusieurs fois, après le rassemblement des filaments en fils. On effectue ainsi quelquefois, selon l'utilisation envisagée et la nature des fils, un prétraitement d'irradiation ou de chauffage au moment de la collecte des fils sous diverses formes d'enroulements, de manière à prépolymériser l'ensimage, dont la polymérisation proprement dite est réalisée dans un traitement ultérieur d'irradiation ou de chauffage, lorsque le fil est déroulé en vue de la mise en oeuvre spécifique à laquelle il est destiné, textile ou de renforcement de matières organiques ou inorganiques. En effet, le fil revêtu de la composition non encore polymérisée ne présente pas une intégrité au sens ordinaire du terme, car les filaments gainés qui le constituent peuvent glisser les uns sur les autres. Ce fil est alors aisément manipulable et, lorsqu'il est bobiné sous forme d'enroulements, peut facilement être extrait des enroulements sans avoir subi au préalable de traitement de polymérisation de l'ensimage. Le fil revêtu de la composition d'ensimage non encore polymérisée a, par ailleurs, une très bonne aptitude au mouillage et à l'imprégnation par des matières à renforcer, l'imprégnation pouvant ainsi se faire plus rapidement (gain de productivité) et les composites obtenus présentant ainsi un aspect plus homogène et certaines propriétés mécaniques améliorées.

Cependant, comme décrit dans le brevet EP 0 570 283, la polymérisation de l'ensimage par irradiation aux ultraviolets d'un fil sous forme d'enroulement peut également comporter des avantages.

En ce qui concerne le dépôt d'ensimages anhydres sur les filaments de verre, plusieurs techniques sont connues. Ainsi, selon la demande FR 97/05926 déjà mentionnée, ce dépôt est effectué « à l'aide d'un rouleau, d'un pulvérisateur, à l'aide d'un dispositif faisant également office d'organe de rassemblement, ou par l'intermédiaire d'autres fils ou filaments revêtus de la composition et mis au contact des filaments de verre ». Cette dernière technique fait référence au cas particulier de la réalisation de fils composites, constitués de filaments de verre et de filaments ou fils polymères thermoplastiques entremêlés.

Par définition, un dépôt par pulvérisation s'accompagne immanquablement de pertes plus ou moins importantes d'ensimage ; la récupération de cette proportion perdue, à supposer qu'elle soit possible, constitue un handicap.

Le mode de dépôt au moyen d'un rouleau ou d'un dispositif de rassemblement des filaments en fils consiste en un prélèvement d'ensimage à partir d'une pellicule liquide plus ou moins visqueuse et épaisse formée sur une surface lisse, présentant des gammes de propriétés physiques, notamment de dureté et de microporosité de surface, du type de celles des surfaces métalliques. Partant de la constatation que la nature chimique des ensimages anhydres en permet la mise en oeuvre en quantités toujours plus faibles, il existe à l'heure actuelle un besoin pour un procédé de formation, sur une surface macroscopiquement lisse de type métallique, céramique ou organique, d'une pellicule liquide toujours plus fine, d'épaisseur parfaitement régulière, contrôlable et reproductible. En effet, on peut attendre qu'un prélèvement d'ensimage sur les filaments à partir d'une telle pellicule aboutisse à l'enrobage des filaments par une quantité minimale d'ensimage, avec un rendement de dépôt accru, c'est-à-dire une diminution des pertes d'ensimage, et ce dans des conditions totalement maîtrisées. Finalement, on vise bien entendu l'obtention de filaments, de fils et de matières renforcées les contenant aux propriétés mécaniques suffisantes, ou au moins préservées, ou même nouvelles à certains égards.

Or, il n'existe pas à l'heure actuelle de procédé permettant de former par exemple à la surface d'un rouleau métallique, un telle fine pellicule d'ensimage anhydre de manière réglable. En effet, l'immersion de la partie inférieure du rouleau dans la solution d'ensimage, conjuguée à la rotation du rouleau, ont pour résultat la formation à la surface du rouleau d'une couche dont les caractéristiques ne peuvent être réglées que dans une faible mesure en faisant varier la viscosité de la solution et la vitesse de rotation du rouleau. Cette couche est d'épaisseur trop importante et irrégulière, et l'on ne peut éviter des pertes d'ensimage au niveau de l'organe de rassemblement des filaments en fils, ou de la collecte des fils par projection sous l'effet de la force centrifuge inhérente aux vitesses d'enroulement élevées employées.

D'autre part, aucun système de dépôt sur un rouleau ensimeur à l'aide d'une pompe doseuse et d'une buse d'injection n'a encore permis la formation de la pellicule recherchée.

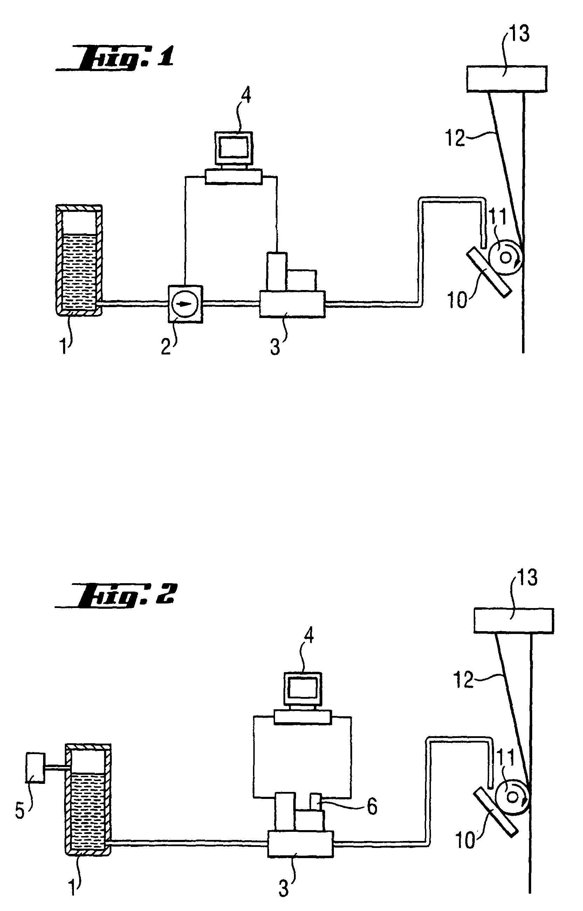

Par ailleurs le brevet EP 0 570 283 précédemment cité mentionne brièvement, dans sa partie descriptive de la figure 1, un dispositif d'enduction 13 constitué d'un applicateur garni d'un feutre humecté de mélange réactif à l'aide d'une pompe doseuse. La structure d'un feutre permet en effet de l'imbiber d'une solution de façon particulièrement homogène. Cependant, le prélèvement d'ensimage suggéré par le brevet européen, du feutre sur les filaments de verre, ne donne pas satisfaction dans le cadre du problème technique exposé ci-dessus, car le dépôt sur les filaments des faibles quantités d'ensimage requises ne pourrait être réalisé qu'au prix d'un assèchement relatif du feutre qui, étant donnée la structure irrégulière par nature du feutre, dont la surface présente des fibres de dimensions, de directions voire de textures variées, constituerait un risque d'accrochage des filaments de verre et donc de rupture desdits filaments. Seules des proportions relativement importantes d'ensimage sont ainsi susceptibles d'être déposées de la manière décrite dans le document.

En conséquence, l'invention a pour but de mettre à disposition un procédé de dépôt à la surface de filaments de verre de quantités minimales de solutions d'ensimage sous forme de pellicules d'épaisseurs régulières, aptes à enrober totalement chaque filament, de telle sorte que ces épaisseurs puissent être précisément déterminées par un choix approprié des conditions opératoires et reproduites avec une fiabilité satisfaisante.

A cet effet, l'objet principal de l'invention est un procédé de fabrication d'un fil continu dans lequel on forme une multiplicité de filaments continus par étirage mécanique d'une multiplicité de filets de matière(s) thermoplastique(s) fondue(s) s'écoulant des orifices d'au moins un dispositif et qui consiste à déposer à la surface d'au moins une partie des filaments un mélange à l'état liquide consistant en un ensimage anhydre, avant de les rassembler en au moins un fil. L'invention réside plus particulièrement dans les étapes successives consistant :
◆ à imbiber en continu un matelas de fibres tenues mécaniquement, tel qu'un feutre ou un tissu, par le mélange à l'état liquide ;
◆ à prélever en continu au moins une partie dudit mélange au moyen d'un rouleau en rotation en contact avec ledit matelas ;
◆ et à déposer sur les filaments en cours d'étirage ledit mélange à partir du rouleau ensimeur.

Ce procédé ouvre la voie à un dépôt régulier sur les filaments de quantités d'ensimage aussi faibles que 0,5 à 1 % en poids par rapport au poids des filaments, quantités suffisantes dans le cas notamment des ensimages anhydres performants connus à l'heure actuelle, avec un rendement de dépôt proche de ou égal à 100 %.

Ce rendement, ainsi que l'homogénéité et la reproductibilité du dépôt effectué sur les filaments sont obtenus grâce à la possibilité, ouverte par l'invention, de former à la surface du rouleau ensimeur une pellicule liquide d'épaisseur quasiment constante et inférieure à 8 µm, de préférence comprise entre 3 et 5 µm, avec une précision et une reproductibilité remarquables.

Aucune perte d'ensimage n'est à déplorer : le gain en productivité est sensible. Par exemple, pour une filière produisant 800 kg/jour de filaments, un débit d'ensimage aussi faible que 160 à 350 g/h sera suffisant.

Selon le mode de réalisation le plus courant, tous les filaments constituant le fil sont en verre. L'invention n'exclut cependant pas la variante dans laquelle le fil est constitué de filaments de verre et de filaments organiques, seuls les filaments de verre étant munis d'un dépôt dudit mélange à l'état liquide ou, au contraire, les filaments organiques étant également munis de ce dépôt, ou d'un dépôt d'ensimage différent, les différentes compositions d'ensimages étant notamment susceptibles de réagir les unes avec les autres. Par filaments organiques, on entend des filaments polymères thermoplastiques, tels qu'en polypropylène, polyamide ou polyester. Ces filaments polymères peuvent être projetés entre les filaments de verre déjà ensimés, avant le rassemblement de tous ces filaments en fil, comme décrit dans le brevet EP 0 599 695.

Etant donné les qualités des ensimages anhydres citées précédemment, ainsi que leur excellente capacité de mouillage des filaments, il est compréhensible que le mélange liquide à déposer sur les filaments consiste en un tel ensimage anhydre, pour la définition duquel il est fait référence au contenu du brevet EP 0 570 283 et des demandes FR 93/14792, 96/00067 et FR 97/05926 déjà citées.

D'autre part, l'application double ou multiple du procédé de l'invention sur les filaments au cours d'étirage avant leur rassemblement en fil(s), dans le but d'y transférer des compositions liquides susceptibles de réagir les unes avec les autres, notamment à température ambiante par copolymérisation de constituants appartenant à de telles compositions distinctes, fait également partie de l'invention. En d'autres termes, l'encombrement du dispositif nécessaire à la mise en oeuvre du procédé de l'invention n'empêche nullement d'en associer deux ou plusieurs pour effectuer une double dépose ou une dépose multiple sur un unique ensemble de filaments, comme décrit dans la demande FR 97/05926.

Les fils obtenus par le procédé de l'invention sont généralement collectés sous forme d'enroulements sur des supports en rotation. Les fils obtenus selon l'invention sont aisément dévidables d'enroulements et aisément manipulables.

Les fils peuvent également être collectés sur des supports récepteurs en translation. Ils peuvent en effet être projetés par un organe servant également à les étirer, vers la surface de collecte se déplaçant transversalement à la direction des fils projetés en vue d'obtenir une nappe de fils continus entremêlés appelée « mat ». Ils peuvent également être coupés avant collecte par un organe servant également à les étirer.

Les fils obtenus selon l'invention peuvent ainsi se trouver sous différentes formes après collecte, notamment sous forme de bobines de fils continus (stratifils, gâteaux, cops, ...), sous forme de fils coupés, peuvent être assemblés sous forme de tresses, de rubans, de mats ou de réseaux, tissés ou non, etc. Les filaments de verre formant ces fils peuvent présenter un diamètre compris entre 5 et 30 microns et le verre utilisé pour réaliser ces filaments peut être n'importe quel verre : verre E, verre AR (alcali-résistant), etc.

Les fils obtenus par un procédé conforme à l'invention peuvent être associés avantageusement à différentes matières à renforcer en vue de la réalisation de pièces composites présentant de bonnes propriétés mécaniques. Les composites sont avantageusement obtenus par association d'au moins des fils de verre selon l'invention et d'au moins une matière organique et/ou inorganique, le taux de verre au sein de ces composites étant généralement compris entre 30 et 75 % en poids.

En conséquence, l'invention a également pour objet un produit constitué, au moins en partie, d'un fil obtenu par un procédé tel que décrit ci-dessus. Ce fil peut ou non avoir été soumis à un traitement ultérieur de coupe, tissage, à une projection mécanique ou à tout autre procédé de mise en forme ; il est éventuellement mélangé à une matière organique ou minérale pour en assurer le renforcement.

Ce fil présente une perte au feu faible au plus égale à 3 % en poids et même, dans de nombreux modes de réalisation, au plus égale à 1 % en poids.

D'autres caractéristiques et avantages de l'invention apparaîtront à la lumière de la description qui suit, des dessins en annexe dans lesquels :
◆ les figures 1 à 3 sont des représentations schématiques de trois dispositifs de mise en oeuvre du procédé de l'invention.

Ces dispositifs comportent une réserve 1 d'ensimage maintenu éventuellement à une température constante assurant une bonne conservation du produit, afin de garantir la stabilité des conditions de dosage.

Selon la figure 1, l'ensimage est aspiré par une pompe 2 de type à membrane ou péristaltique, soumettant les fluides à des cisaillements particulièrement faibles.

La quantité aspirée est transférée sur le feutre de répartition 10 après avoir traversé un débitmètre 3.

D'autre part, un micro-ordinateur 4 est relié à la fois au débitmètre 3 et à la pompe 2, de manière à adapter en permanence le volume ou la masse d'ensimage délivrés par la pompe 2 en fonction de l'information fournie par le débitmètre.

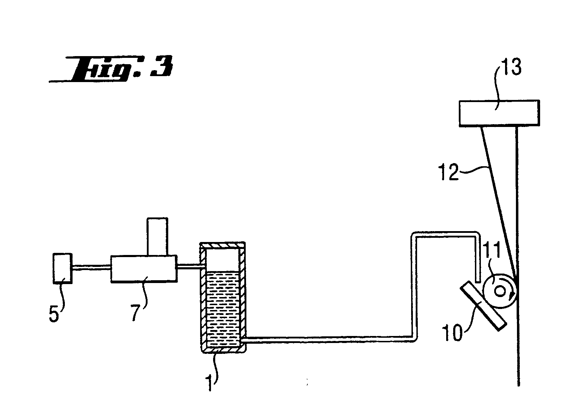

Les dispositifs des figures 2 et 3 emploient, pour l'alimentation du feutre 10, une source d'air comprimé 5 en tête du circuit de fluide en amont de la réserve 1.

Conformément à la figure 2. l'ensimage provenant de la réserve 1 traverse un débitmètre 3 et une vanne régulatrice 6, reliés tous deux à un micro-ordinateur 4. Cette fois, le micro-ordinateur 4 utilise l'information délivrée par le débitmètre 3 pour commander, en temps réel, une éventuelle correction du débit au moyen de la vanne régulatrice 6.

Cette fonction régulatrice est assurée, dans le dispositif simplifié représenté en figure 3, par une vanne régulatrice volumétrique à compensation de température 7, intercalée dans le circuit de fluide entre la source d'air sous pression 5 et la réserve 1. La vanne 7, à fonction régulatrice intégrée et autonome, rend superflu l'emploi d'un organe auxiliaire de gestion et commande du type ordinateur.

Le feutre 10 est fixé sur une plaque rigide, dont l'inclinaison peut être modifiée et la pression exercée sur le rouleau contrôlée au moyen, par exemple, d'un vérin pneumatique à poussée régulée, non représenté.

Le feutre 10, alimenté régulièrement en ensimage, a pour fonction de répartir celui-ci sur une portion de la surface du rouleau ensimeur 11 légèrement plus grande que celle qui est en contact avec la nappe de filaments 12 en cours d'étirage et délivrés par la filière 13. L'écoulement de l'ensimage et sa répartition dans le feutre 10 incliné se font par action de la gravité. La largeur de la zone imprégnée du feutre 10 (c'est-à-dire sa dimension transversale, en référence à une direction longitudinale définie par l'écoulement sur le plan incliné), le temps d'écoulement et de répartition dépendent de la viscosité de l'ensimage, des caractéristiques du feutre (nature des constituants, densité, texture, dimensions) et de la géométrie de positionnement (inclinaison).

La texture du feutre et la viscosité de l'ensimage sont étroitement liées. Par exemple, un feutre dense sera mouillé superficiellement par un ensimage visqueux. à l'opposé, un ensimage liquide pénétrera facilement dans un feutre peu dense et s'écoulera sans se répartir sur toute la largeur.

L'inclinaison du feutre joue aussi un rôle important dans la répartition de l'ensimage en donnant plus ou moins d'effet aux forces de gravité. Cette possibilité permet d'ajuster le fonctionnement ou de compenser d'éventuels défauts de répartition dus à un feutre pas tout à fait bien adapté.

Les correspondances optimales entre la viscosité de l'ensimage et la densité du feutre sont consignées dans le tableau ci-dessous, pour une inclinaison du feutre de 30° par rapport à l'horizontale, une longueur d'écoulement de 6 cm, une largeur de répartition de 6 cm et une pression du vérin sur le dispositif d'enduction de 1 bar :

| Viscosité de l'ensimage à 20°C (cP) | Densité du feutre (g/dm³) |
|---|---|
| < 20 | 200 - 400 |
| 20 - 50 | 150 - 2S0 |
| 50 - 100 | 125 - 175 |
| 100 - 250 | 100-150 |
| 250 - 400 | < 100 |

La nature du feutre intervient dans la qualité de répartition de l'ensimage par deux critères liés au type de fibre employé : la nature chimique des fibres, leur diamètre et leur homogénéité.

La grande majorité des fibres constituant les feutres est composée de fibres de cellulose ou de laine. Des matériaux synthétiques commencent aussi à être utilisés tels que les fibres de polypropylène ou de polyester.

Pour des compositions d'ensimage dont les constituants sont peu polaires, les feutres synthétiques de type polypropylène sont bien adaptés et la compatibilité chimique est satisfaisante. Pour des compositions à caractère polaire marqué (ce qui est le cas de beaucoup de composants constitutifs des ensimages), les feutres naturels de type laine (plus hydrophile) sont préférés.

La compatibilité chimique des différents matériaux des feutres peut être modifiée dans un sens ou l'autre par un traitement chimique approprié des fibres. Cependant, les interactions avec les composants de l'ensimage (qui sont, par leur caractère monomérique, de très bons solvants) deviennent difficiles à contrôler. Les fibres sans traitement sont préférées dans la plupart des cas.

D'une manière générale, le diamètre des fibres doit être le plus homogène possible pour faciliter le transfert de l'ensimage sur le rouleau. L'hétérogénéité des fibres, en particulier la présence de grosses fibres, provoque des différences d'épaisseur localisées du film d'ensimage à la surface du rouleau ensimeur mais néanmoins susceptibles d'entraîner des casses au rouleau par assèchement. Les fibres de diamètre faible (généralement - de 20 microns) sont préférées. De plus, la longueur des fibres, leur souplesse et leur enchevêtrement doivent être suffisamment importants pour éviter tout entraînement de fibres entières ou de brisures à la surface du rouleau. La présence d'éléments étrangers à la surface du rouleau occasionne généralement des casses dont l'origine est difficile à déterminer.

Le transfert de l'ensimage sur le rouleau ensimeur est de 100% en fonctionnement normal. Pour obtenir une telle performance, il est possible d'agir sur différents paramètres.

En premier lieu, la pression exercée par le feutre sur le rouleau entraîne la formation d'une zone comprimée à l'intérieur du feutre où l'écoulement est très fortement réduit. Elle ne doit pas cependant être trop élevée pour ne pas entraîner de dégradation du rouleau ou des mécanismes de motorisation.

Le rouleau en rotation entraîne l'ensimage disponible, celui-ci étant suffisamment compatible avec le matériau du rouleau pour ne pas provoquer de phénomène de démouillage. De plus, l'ensimage est toujours en quantité très inférieure à ce que le rouleau peut prélever.

A titre d'exemple, pour un rouleau graphite de 40 mm de diamètre et une longueur de contact feutre/rouleau de 80 mm, la pression qu'il faut exercer est, dans la majorité des cas, comprise entre 0,5 et 3 bars.

En second lieu, la vitesse de rotation du rouleau exerce une certaine influence sur le transfert feutre/rouleau dans quelques cas particuliers. Ainsi, lorsque l'ensimage présente une viscosité faible et un mouillage très efficace sur la surface du rouleau (en général pour les ensimages peu polaires) et/ou que le produit final nécessite une perte au feu élevée, c'est-à-dire une quantité d'ensimage importante, il est utile d'augmenter la vitesse de rotation du rouleau ensimeur pour augmenter la surface de prélèvement à mouiller et accroître finalement la quantité d'ensimage entraînée. Lorsqu'un rouleau de 40 mm de diamètre en graphite est utilisé, une variation de la rotation du rouleau entre 50 et 150 t/min donnera satisfaction dans la plupart des cas.

Le troisième et dernier paramètre à prendre en considération pour la qualité du transfert feutre/rouleau est celui de la nature chimique et de l'état de surface du rouleau. Ce paramètre est d'ailleurs encore nettement plus significatif pour la qualité du transfert rouleau/fibre.

Etant donné que les aspects de transfert feutre/rouleau et rouleau/fibre de verre sont étroitement liés, le meilleur matériau est actuellement le graphite.

En fonctionnement normal, la technique de dépose des ensimages anhydres telle que décrite ci-dessus permet un rendement de dépose très proche ou égal à 100 %. Avec les ensimages aqueux, ce rendement est généralement de l'ordre de 40 à 75 %. Etant donné que les coûts des matières premières (ramenées à la matière sèche) sont sensiblement équivalents, l'intérêt économique des ensimages anhydres déposés selon cette méthode est évident.

De plus, sur le plan de l'environnement, il est intéressant de supprimer une source de déchets potentiellement polluante et à l'origine de facteurs de coût annexes pour la destruction des effluents générés.

En cas de production d'effluents (généralement en très faible quantité) lors des phases de nettoyage, d'essais ou de fonctionnement dans des conditions particulières et étant donné que l'ensemble des déchets est de nature organique, ceux-ci peuvent être facilement détruits par incinération dans des installations adaptées.

## Revendications

1. Procédé de fabrication d'un fil continu dans lequel on forme une multiplicité de filaments continus (12) par étirage mécanique d'une multiplicité de filets de matière(s) thermoplastique(s) fondue(s) s'écoulant des orifices d'au moins un dispositif (13) qui consiste à déposer à la surface d'au moins une partie des filaments (12) un mélange à l'état liquide, avant de les rassembler en au moins un fil, **caractérisé en ce qu'**il comprend les étapes successives consistant :
◆ à imbiber en continu un matelas de fibres tenues mécaniquement (10), tel qu'un feutre ou un tissu, par le mélange à l'état liquide ;
◆ à prélever en continu au moins une partie dudit mélange au moyen d'un rouleau (11) en rotation en contact avec ledit matelas (10) ;
◆ et à déposer sur les filaments (12) en cours d'étirage ledit mélange à partir du rouleau ensimeur (11),
◆ **et en ce que** le mélange à l'état liquide est un ensimage anhydre.

2. Procédé selon la revendication 1, **caractérisé en ce que** les filaments (12) comprennent des filaments polymères et des filaments de verre.

3. Procédé selon l'une des revendications 1 ou 2, **caractérisé en ce que** l'alimentation du matelas (10) est effectuée par distribution au moyen d'une pompe doseuse (2), notamment de type à membrane ou péristaltique.

4. Procédé selon la revendication 3, **caractérisé en ce que** les moyens pour l'alimentation du matelas (10) comprennent un dispositif de contrôle permanent consistant en un débitmètre (3) intercalé dans le circuit du fluide entre la pompe (2) et le matelas (10) et en un organe de gestion et de commande (4) tel qu'un ordinateur relié à la fois au débitmètre (3) et à la pompe (2).

5. Procédé selon l'une des revendications 1 ou 2, **caractérisé en ce que** l'alimentation du matelas (10) est effectuée par apport d'un gaz sous pression (5) en amont d'une réserve (1) dudit mélange à l'état liquide.

6. Procédé selon la revendication 5, **caractérisé en ce que** les moyens pour l'alimentation du matelas (10) comprennent un dispositif de régulation consistant en un débitmètre (3) et une vanne régulatrice (6) intercalés dans le circuit de fluide, entre ladite réserve (1) et le matelas (10) et en un organe de gestion et de commande (4) tel qu'un ordinateur relié à la fois au débitmètre (3) et à la vanne régulatrice (6).

7. Procédé selon la revendication 5, **caractérisé en ce que** les moyens pour l'alimentation du matelas (10) comprennent un dispositif de régulation consistant en une vanne régulatrice volumétrique à compensation de température (7) intercalée dans le circuit de fluide entre l'arrivée d'air sous pression (5) et ladite réserve (1).

8. Procédé selon l'une des revendications 1 à 7, **caractérisé en ce que** la surface du matelas (10) définit un plan incliné **et en ce que** l'écoulement et la répartition dudit mélange à l'état liquide dans le matelas (10) se font par gravité.

9. Procédé selon l'une des revendications 1 à 8, **caractérisé en ce que** le matelas (10) est choisi parmi les feutres ou tissus synthétiques, notamment en polypropylène ou en polyester et parmi les feutres ou tissus naturels, notamment en laine ou en cellulose.

10. Procédé selon l'une des revendications 1 à 9, **caractérisé en ce que** le matelas (10) est essentiellement constitué de fibres de diamètres inférieurs à 20 µm.

11. Procédé selon l'une des revendications 1 à 10, **caractérisé en ce que** le rouleau ensimeur (11) présente des microporosités de surface de dimensions inférieures à 10 µm.

12. Procédé selon la revendication 11, **caractérisé en ce que** la surface du rouleau ensimeur (11) est constituée de graphite.

13. Procédé selon l'une des revendications 1 à 12, **caractérisé en ce que** l'épaisseur de la pellicule dudit mélange à l'état liquide formée à la surface du rouleau ensimeur (11) est inférieure à 8 µm, de préférence comprise entre 3 et 5 µm.

14. Procédé selon l'une des revendications 1 à 13, **caractérisé en ce que** ledit mélange à l'état liquide est déposé sur les filaments (12) à raison d'au plus 3 % en poids, de préférence au plus 1 % en poids par rapport au poids des filaments (12).

15. Procédé selon l'une des revendications 1 à 14, **caractérisé en ce qu'**il est mis en oeuvre plusieurs fois successivement pour transférer séparément sur les filaments (12) des mélanges à l'état liquide susceptibles de réagir les uns avec les autres.

## Patentansprüche

1. Verfahren zur Herstellung eines Endlosfadens, in welchem eine Vielzahl endloser Filamente (12) durch mechanisches Ziehen einer Vielzahl von aus einem oder mehreren geschmolzenen wärmeformbaren Materialien bestehenden Strahlen, die durch die Öffnungen mindestens einer Vorrichtung (13) fließen, gebildet wird, das darin besteht, ein im flüssigen Zustand vorliegendes Gemisch auf der Oberfläche wenigstens eines Teils der Filamente (12) aufzubringen, bevor diese zu mindestens einem Faden vereinigt werden, **dadurch gekennzeichnet, dass** es die aufeinander folgenden Stufen umfasst, die im
- kontinuierlichen Durchtränken einer Matte (10) aus mechanisch zusammengehaltenen Fasern wie ein Filz oder Gewebe mit dem im flüssigen Zustand vorliegenden Gemisch,
- kontinuierlichen Entnehmen wenigstens eines Teils dieses Gemischs mittels einer mit der Matte (10) in Berührung befindlichen rotierenden Walze (11) und
- Aufbringen des Gemischs während des Ziehvorgangs von der Beschichtungswalze (11) auf die Filamente (12)
bestehen, **und dass** das im flüssigen Zustand vorliegende Gemisch eine wasserfreie Schlichte ist.

2. Verfahren nach Anspruch 1, **dadurch gekennzeichnet, dass** die Filamente (12) Polymer- und Glasfilamente umfassen.

3. Verfahren nach Anspruch 1 oder 2, **dadurch gekennzeichnet, dass** die Zufuhr zur Matte (10) durch Verteilung mittels einer Dosierpumpe (2), insbesondere einer Membran- oder Schlauchquetschpumpe, erfolgt.

4. Verfahren nach Anspruch 3, **dadurch gekennzeichnet, dass** die Mittel für die Zufuhr zur Matte (10) eine Einrichtung zur ständigen Kontrolle umfassen, die aus einem Durchflussmesser (3), der im Fluidkreislauf zwischen der Pumpe (2) und der Matte (10) angeordnet ist, und einem Überwachungs- und Regelungsorgan (4) wie einem Rechner, an welchen gleichzeitig Durchflussmesser (3) und Pumpe (2) angeschlossen sind, besteht.

5. Verfahren nach Anspruch 1 oder 2, **dadurch gekennzeichnet, dass** die Zufuhr zur Matte (10) durch die Zuleitung eines Druckgases (5) vor einem Behälter (1) mit dem im flüssigen Zustand vorliegenden Gemisch erfolgt.

6. Verfahren nach Anspruch 5, **dadurch gekennzeichnet, dass** die Mittel für die Zufuhr zur Matte (10) eine Regelungseinrichtung umfassen, die aus einem Durchflussmesser (3) und einem Regelventil (6), die im Fluidkreislauf zwischen dem Behälter (1) und der Matte (10) angeordnet sind, und einem Überwachungs- und Regelungsorgan (4) wie einem Rechner, an welchen gleichzeitig Durchflussmesser (3) und Regelventil (6) angeschlossen sind, besteht.

7. Verfahren nach Anspruch 5, **dadurch gekennzeichnet, dass** die Mittel für die Zufuhr zur Matte (10) eine Regelungseinrichtung umfassen, die aus einem volumetrischen Regelventil (7) mit Temperaturausgleich, das im Fluidkreislauf zwischen der Druckluftzuleitung (5) und dem Behälter (1) angeordnet ist, besteht.

8. Verfahren nach einem der Ansprüche 1 bis 7, **dadurch gekennzeichnet, dass** die Oberfläche der Matte (10) eine geneigte Ebene bildet, und dass das Fließen und die Verteilung des im flüssigen Zustand vorliegenden Gemischs in der Matte (10) durch die Schwerkraft erfolgt.

9. Verfahren nach einem der Ansprüche 1 bis 8, **dadurch gekennzeichnet, dass** die Matte (10) aus synthetischen Filzen oder Geweben, insbesondere aus Polypropylen bzw. Polyester, und aus natürlichen Filzen oder Geweben, insbesondere aus Wolle bzw. Cellulose, ausgewählt wird.

10. Verfahren nach einem der Ansprüche 1 bis 9, **dadurch gekennzeichnet, dass** die Matte (10) im Wesentlichen aus Fasern mit einem Durchmesser von unter 20 µm besteht.

11. Verfahren nach einem der Ansprüche 1 bis 10, **dadurch gekennzeichnet, dass** die Beschichtungswalze (11) auf der Oberfläche Mikroporositäten mit Abmessungen von unter 10 µm aufweist.

12. Verfahren nach Anspruch 11, **dadurch gekennzeichnet, dass** die Oberfläche der Beschichtungswalze (11) aus Graphit besteht.

13. Verfahren nach einem der Ansprüche 1 bis 12, **dadurch gekennzeichnet, dass** die Dicke des Films aus dem im flüssigen Zustand vorliegenden Gemisch, der sich auf der Oberfläche der Beschichtungswalze (11) gebildet hat, weniger als 8 µm und vorzugsweise 3 bis 5 µm beträgt.

14. Verfahren nach einem der Ansprüche 1 bis 13, **dadurch gekennzeichnet, dass** das im flüssigen Zustand vorliegende Gemisch mit einem Anteil von höchstens 3 Gew.-% und vorzugsweise höchstens 1 Gew.-% des Gewichts der Filamente (12) auf diese aufgebracht wird.

15. Verfahren nach einem der Ansprüche 1 bis 14, **dadurch gekennzeichnet, dass** es mehrmals nacheinander durchgeführt wird, um im flüssigen Zustand vorliegende Gemische, die in der Lage sind, miteinander zu reagieren, getrennt auf die Filamente (12) zu übertragen.

## Claims

1. Process for manufacturing a continuous yarn, which consists in forming a multiplicity of continuous filaments (12) by the mechanical drawing of a multiplicity of streams of molten thermoplastic(s) flowing out of the orifices of at least one device (13) and which consists in depositing a mixture, in the liquid state, on the surface of at least some of the filaments (12) before they are converged into at least one yarn, **characterized in that** it comprises the successive steps consisting:
• in continuously impregnating a mat of mechanically held-together fibres (10), such as a felt or a woven fabric, with the mixture in the liquid state;
• in continuously taking up at least some of the said mixture by means of a rotating roller (11) in contact with the said mat (10); and
• using the sizing roller (11), in depositing the said mixture on the filaments (12) while they are being drawn; and
• **in that** the mixture in the liquid state is an anhydrous size.

2. Process according to Claim 1, **characterized in that** the filaments (12) comprise polymer filaments and glass filaments.

3. Process according to Claim 1 or 2, **characterized in that** the mat (10) is fed by dispensing by means of a metering pump (2), especially a pump of the diaphragm or peristaltic type.

4. Process according to Claim 5, **characterized in that** the means for feeding the mat (10) comprise a permanent control device consisting of a flow meter (3), inserted into the fluid circuit between the pump (2) and the mat (10), and of a management and control means (4) such as a computer connected both to the flow meter (3) and to the pump (2).

5. Process according to one of Claims 1 or 2, **characterized in that** the mat (10) is fed by delivering a pressurized gas (5) upstream of a tank (1) of the said mixture in the liquid state.

6. Process according to Claim 5, **characterized in that** the means for feeding the mat (10) comprise a regulating device consisting of a flow meter (3) and a regulating valve (6), these being inserted into the fluid circuit between the said tank (1) and the mat (10), and of a management and control means (4) such as a computer connected both to the flow meter (3) and to the regulating valve (6).

7. Process according to Claim 5, **characterized in that** the means for feeding the mat (10) comprise a regulating device consisting of a temperature-compensating volumetric regulating valve (7) inserted into the fluid circuit between the pressurized-air inlet (5) and the said tank (1).

8. Process according to one of Claims 1 to 7, **characterized in that** the surface of the mat (10) defines an inclined plane **and in that** the flow and the distribution of the said mixture in the liquid state within the mat (10) take place by gravity.

9. Process according to one of Claims 1 to 8, **characterized in that** the mat (10) is chosen from synthetic felts or woven fabrics, especially made of polypropylene or of polyester, and from natural felts or woven fabrics, especially made of wool or of cellulose.

10. Process according to one of Claims 1 to 9, **characterized in that** the mat (10) essentially consists of fibres having diameters of less than 20 µm.

11. Process according to one of Claims 1 to 10, **characterized in that** the sizing roller (11) has surface micropores whose dimensions are less than 10 µm.

12. Process according to Claim 11, **characterized in that** the surface of the sizing roller (11) is made of graphite.

13. Process according to one of Claims 1 to 12, **characterized in that** the thickness of the film of the said mixture in the liquid state formed on the surface of the sizing roller (11) is less than 8 µm, preferably between 3 and 5 µm.

14. Process according to one of Claims 1 to 13, **characterized in that** the said mixture in the liquid state is deposited onto the filaments (12) in an amount of at most 3% by weight, preferably at most 1% by weight, with respect to the weight of the filaments (12).

15. Process according to one of Claims 1 to 14, **characterized in that** it is employed several times in succession in order to transfer, separately, onto the filaments (12), mixtures in the liquid state which are capable of reacting with one another.
